# EUROPÄISCHE PATENTSCHRIFT

(11) **EP 1 557 257 B1**
(45) Veröffentlichungstag und Bekanntmachung des Hinweises auf die Patenterteilung: **21.06.2006**
(21) Anmeldenummer: 04001507.5
(22) Anmeldetag: 24.01.2004
(51) Int. Cl.: B29C 53/58

(54) **Verfahren zur Herstellung eines Wickelschlauches aus thermoplastischem Kunststoff**
Method for producing a wrapped tube made of thermoplastic material
Procédé pour fabriquer un tube bobiné en matériau thermoplastique

(43) Veröffentlichungstag der Anmeldung: 27.07.2005
(73) Patentinhaber: NORRES Schlauchtechnik GmbH & Co. KG, 45881 Gelsenkirchen (DE)
(72) Erfinder: Mollen, Burkhard, Dipl.-Ing., 45239 Essen (DE); Engelmeyer, Jörg, Dipl.-Ing., 46562 Voerde (DE); Mankiewicz, Mathias, Dipl.-Ing., 58456 Witten (DE)
(74) Vertreter: Rohmann, Michael

(56) Entgegenhaltungen:
- DE-A- 19 848 172
- DE-B- 1 236 769

## Beschreibung

Die Erfindung betrifft ein Verfahren zur Herstellung eines Wickelschlauches aus thermoplastischem Kunststoff, wobei zumindest ein Kunststoffstreifen auf einem zylinderförmigen Wickelkern wendelförmig zu dem Wickelschlauch kontinuierlich gewickelt wird, wobei Längskantenabschnitte benachbarter Wendelwicklungen des Kunststoffstreifens überlappend miteinander verbunden werden. - Vorzugsweise wird lediglich ein Kunststoffstreifen zugeführt und wendelförmig zu dem Wickelschlauch gewickelt, wobei die Kunststoffstreifensegmente benachbarter Wendelwicklungen über Längskantenabschnitte überlappend miteinander verbunden werden. Es liegt jedoch grundsätzlich auch im Rahmen der Erfindung, zwei oder mehr Kunststoffstreifen zuzuführen und wendelförmig zu dem Wickelschlauch zu wickeln.

Verfahren der eingangs genannten Art sind aus der Praxis bekannt. Diese Verfahren zeichnen sich aber durch den Nachteil aus, dass eine funktionssichere und effektive Verbindung der Längskantenabschnitte benachbarter Wendelwicklungen oftmals nur schwierig und aufwendig realisierbar ist. Mit anderen Worten lassen die mit diesen Verfahren hergestellten Wickelschläuche im Hinblick auf die Festigkeit der Verbindungen der Längskantenabschnitte häufig zu wünschen übrig. Damit eine Verbindung der Längskantenabschnitte hergestellt werden kann, ist es beispielsweise bekannt, dass der Kunststoffstreifen vollständig aus verschweißbarem Kunststoffmaterial besteht. Durch entsprechende Erhitzung wird das Kunststoffmaterial der Längskantenabschnitte erweicht und die überlappenden Längskantenabschnitte werden adhäsiv miteinander verbunden. Die Erhitzung wird aber in der Regel nicht gezielt vorgenommen, sondern aus der Praxis ist es bekannt, Heißluft in die wendelförmige Wicklung des Kunststoffstreifens einzublasen, so dass die hierdurch erweichten überlappenden Längskantenabschnitte eine adhäsive Verbindung eingehen. Die mechanische Widerstandsfähigkeit der auf diese Weise hergestellten Verbindungen zwischen den Längskantenabschnitten benachbarter Wendelwicklungen lässt zu wünschen übrig. Der nach diesem Verfahren hergestellte Wickelschlauch weist im Übrigen eine relativ unebene bzw. wenig glatte Innenfläche auf. Das gilt insbesondere dann, wenn eine Armierung zwischen den Längskantenabschnitten eingeschmolzen wurde. Dadurch wird beispielsweise ein Transport von durch den Wickelschlauch geförderten Substanzen behindert. Es wird vermutet, dass die vorstehend beschriebenen Nachteile unter anderem darauf zurückzuführen sind, dass beim Wickeln des Kunststoffstreifens um den Wickelkern ein ausreichender reibschlüssiger und/oder kraftschlüssiger Kontakt der zu verbindenden Längskantenabschnitte nicht immer zustande kommt. Um die Verbindung zwischen den überlappenden Längskantenabschnitten zu verbessern ist es aus dem Stand der Technik auch bekannt, die überlappenden Bereiche mit Druckrollen oder Druckwalzen zu beaufschlagen. Das hat sich grundsätzlich bewährt. Allerdings wäre eine höhere Wickelgeschwindigkeit bei nichtsdestoweniger funktionssicherer und fester Verbindung der Längskantenabschnitte wünschenswert.

Der Erfindung liegt das technische Problem zugrunde, ein Verfahren der eingangs genannten Art anzugeben, mit dem die oben genannten Nachteile vermieden werden können und mit dem insbesondere zum einen eine feste und langfristig funktionssichere Verbindung zwischen den überlappenden Längskantenabschnitten verwirklicht werden kann und zwar auf einfach und wenig aufwendige Weise und das zum anderen mit im Vergleich zu den bekannten Maßnahmen höherer Produktionsgeschwindigkeit arbeitet.

Zur Lösung dieses technischen Problems lehrt die Erfindung ein Verfahren der eingangs genannten Art, nach Anspruch 1 oder nach Anspruch 3.

Dass die Wickelkernoberfläche mit der Maßgabe eingerichtet ist, dass der Kunststoffstreifen in reibschlüssigen Kontakt mit der Wickelkernoberfläche kommt, meint im Rahmen der Erfindung insbesondere, dass die Wickelkernoberfläche profiliert, vorzugsweise gerändelt ist und/oder dass die Wickelkernoberfläche eine Beschichtung aufweist, insbesondere eine Beschichtung aus einem Elastomer aufweist, die den reibschlüssigen Kontakt ermöglicht.

Nach einer ersten sehr bevorzugten Ausführungsform der Erfindung wird mit einem Wickelkern gearbeitet, dessen Wickelkernoberfläche eine Rändelung aufweist. Wickelkernoberfläche meint hier insbesondere die Zylindermantelfläche des zylinderförmigen Wickelkerns. Sehr bevorzugt arbeitet man im Rahmen des erfindungsgemäßen Verfahrens mit einem Wickelkern, dessen Wickelkernoberfläche eine Rändelung in Form von Riefen aufweist, welche Riefen vorzugsweise in Richtung der Wickelkernlängsachse verlaufen. In Richtung der Wickelkernlängsachse meint nach einer sehr bevorzugten Ausführungsform der Erfindung, dass die Riefen parallel oder im Wesentlichen parallel zur Wickelkernlängsachse auf der Zylindermantelfläche des Wickelkerns verlaufen. In Richtung der Wickelkernlängsachse meint nach einer anderen Ausführungsform der Erfindung aber auch, dass die Riefen einen Winkel von 0 bis 45° mit der Wickelkernlängsachse bzw. mit einer Parallelen der Wickelkernlängsachse bilden können. Zweckmäßigerweise beträgt die Teilung der Rändelung auf der Wickelkernoberfläche 0,2 bis 2 mm, vorzugsweise 0,2 bis 1,5 mm. Teilung der Rändelung meint hier den Abstand von einer Rändelspitze zu der benachbarten Rändelspitze bzw. den Abstand einer Rändelvertiefung zu der benachbarten Rändelvertiefung. Es liegt im Rahmen der Erfindung, dass zumindest 80 %, vorzugsweise zumindest 90 % und sehr bevorzugt zumindest 95 % der Wickelkernoberfläche bzw. der Zylindermantelfläche des zylinderförmigen Wickelkerns mit der Rändelung versehen ist. - Der Wickelkern besteht nach einer Ausführungsform im Übrigen aus Stahl und ist zweckmäßigerweise massiv ausgeführt.

Nach einer zweiten sehr bevorzugten Ausführungsform der Erfindung wird ein Reibschluss bzw. ein hoher Reibschluss zwischen der Wickelkernoberfläche und dem aufgewickelte Kunststoffstreifen durch eine entsprechende Beschichtung der Wickelkernoberfläche erreicht. Nach bevorzugter Ausführungsform des erfindungsgemäßen Verfahrens wird dabei mit einem Wickelkern gearbeitet, dessen Wickelkernoberfläche eine aus zumindest einem Elastomer bestehende Beschichtung aufweist. Zweckmäßigerweise sind zumindest 80 %, vorzugsweise zumindest 90 %, bevorzugt zumindest 95 % und sehr bevorzugt 100 % der Wickelkernoberfläche bzw. der Zylindermantelfläche des zylinderförmigen Wickelkerns mit dem Elastomer beschichtet. Es liegt im Rahmen der Erfindung, dass als Elastomer für die Beschichtung der Wickelkernoberfläche ein Polyurethan eingesetzt wird. Nach einer anderen Ausführungsform der Erfindung wird die Wickelkernoberfläche mit Gummi beschichtet. Zweckmäßigerweise beträgt die Härte des Elastomers für die Beschichtung der Wickelkernoberfläche 65 bis 95 Shore A. Die Beschichtung der Wickelkernoberfläche mit einem Elastomeren bewirkt einen vorteilhaft hohen Kraftschluss zwischen Wickelkernoberfläche und aufgewickeltem Kunststoffstreifen. Außerdem wirkt die Beschichtung stoß- und schwingungsdämpfend. Bei der erfindungsgemäß beschichteten Wickelkernoberfläche bleibt der Reibschluss auch durch äußere Einflüsse wie bei Einwirkung von Kühlwasser, Öl und dergleichen weitgehend unbeeinflusst.

Der Erfindung liegt die Erkenntnis zugrunde, dass mit dem erfindungsgemäßen Verfahren ein funktionssicheres und einfaches Wickeln des Wickelschlauches möglich ist. Es wird eine überraschend feste Verbindung des Kunststoffstreifens bzw. der überlappenden Längskantenabschnitte des Kunststoffstreifens erzielt und zwar ist das insbesondere bei überraschend hohen Wickelgeschwindigkeiten möglich. Offenbar wird bei einer hohen Wickelgeschwindigkeit in Kombination mit der erfindungsgemäßen Oberflächengestaltung des Wickelkerns bei Umschlingung des Wickelkerns mit dem Kunststoffstreifen ein so hoher Reibschluss hervorgerufen, dass eine effektive flächige Anpressung des Kunststoffstreifens auf den Wickelkern stattfindet. Bei Einbringung des erfindungsgemäßen schmelzflüssigen Zusatzkunststoffes kann dann eine überraschend feste und zwar langfristig feste Verbindung zwischen den Längskantenabschnitten erreicht werden. Der Erfindung liegt dabei vor allem die Erkenntnis zugrunde, dass bei dem Verfahren eine aufwendige Druckbeaufschlagung der überlappenden Längskantenabschnitte durch Druckrollen- oder Druckwalzenaggregate grundsätzlich nicht erforderlich ist. Es liegt somit im Rahmen der Erfindung, dass bei dem erfindungsgemäßen Verfahren auf eine solche Druckbeaufschlagung der überlappenden Längskantenabschnitte mit Druckrollen oder Druckwalzen verzichtet wird. Im Ergebnis wird bei überraschend hoher Fertigungsgeschwindigkeit und mit geringem Aufwand eine langfristig feste Verbindung des Kunststoffstreifens bzw. zwischen den Längskantenabschnitten des Kunststoffstreifens erzielt. Der resultierende Wickelschlauch zeichnet sich durch Festigkeit und Resistenz gegenüber mechanischen Beanspruchungen aus. Mit dem erfindungsgemäßen Verfahren kann also ein Wickelschlauch hergestellt werden, der in festigkeitsmäßiger und stabilitätsmäßiger Hinsicht allen Anforderungen entspricht. Im Zuge der Durchführung des erfindungsgemäßen Verfahrens kann der Kunststoffstreifen aus einer Vorratseinrichtung, beispielsweise von einer Vorratstrommel zugeführt werden. Der Kunststoffstreifen kann aber auch gleichsam online extrudiert und anschließend auf den Wickelkern aufgewickelt werden. Der Umschlingungseffekt bzw. die flächige Anpressung am Wickelkernabschnitt kann noch verbessert werden, wenn der Kunststoffstreifen nach bevorzugter Ausführungsform der Erfindung durch zumindest eine Bremseinrichtung geführt wird, bevor er auf den Wickelkern aufgewickelt wird.

Eine sehr bevorzugte Ausführungsform des erfindungsgemäßen Verfahrens ist dadurch gekennzeichnet, dass die Breite des aufgebrachten Streifens aus schmelzflüssigem Zusatzkunststoff mit der späteren Breite des erstarrten Zusatzkunststoffes identisch ist oder aber nur geringfügig kleiner ist. Auf diese Weise wird die Umformarbeit auf ein Minimum reduziert. Eine bevorzugte Ausführungsform der Erfindung zeichnet sich dadurch aus, dass der Zusatzkunststoff (Schweißzusatzwerkstoff) aus einem thermoplastischen Kunststoff besteht, aus dem auch der Kunststoffstreifen des Wickelschlauches besteht. Nach einer anderen Ausführungsform kann der Zusatzkunststoff jedoch auch aus einem von dem Material des Kunststoffstreifens verschiedenen thermoplastischen Kunststoff bestehen.

Es liegt im Rahmen der Erfindung, dass die Dicke des Kunststoffstreifens im Vergleich zum Durchmesser des herzustellenden Wickelschlauches gering ist und insoweit auch die Wanddicke des Wickelschlauches gering im Vergleich zu seinem Durchmesser ist. Nach einer Ausführungsform der Erfindung ist der Kunststoffstreifen ein Folienstreifen, der lediglich oder hauptsächlich aus dem thermoplastischem Kunststoff besteht.

Eine sehr bevorzugte Ausführungsform, der im Rahmen der Erfindung ganz besondere Bedeutung zukommt, ist dadurch gekennzeichnet, dass eine flächige Armierung in den Kunststoffstreifen eingebettet ist. Der Kunststoffstreifen für den Wickelschlauch enthält also gleichsam eine flächige Verstärkungslage, die in den Kunststoff integriert ist. Vorzugsweise ist die flächige Armierung bzw. die flächige Verstärkungslage an ihren beiden Oberflächen von dem Kunststoff des Kunststoffstreifens bedeckt. Die flächige Armierung besteht zweckmäßigerweise aus einem Gewebe und/oder einem Gewirk und/oder einem Geflecht und/oder aus einer Folie. Wenn die flächige Armierung in Form einer Folie ausgeführt ist, so handelt es sich bevorzugt um eine Kunststofffolie, die aus einem anderen Kunststoff als der Kunststoff des Kunststoffstreifens besteht. Nach sehr bevorzugter Ausführungsform weist die flächige Armierung eine offenmaschige Struktur auf. Auf diese Weise kann eine feste und formschlüssige Verbindung mit dem Kunststoff des Kunststoffstreifens hergestellt werden. Eine ganz besonders bevorzugte Ausführungsform ist dadurch gekennzeichnet, dass die flächige Armierung bzw. die flächige Verstärkungslage aus einem Gewebe besteht.

Vorzugsweise ist die flächige Armierung an zumindest einer Längskante, vorzugsweise an beiden Längskanten des Kunststoffstreifens in den Kunststoff eingekapselt. Mit anderen Worten ist die flächige Armierung bzw. die flächige Verstärkungslage an beiden Längskanten in Kunststoff eingebettet, so dass die Armierung an den Längskanten nicht aus dem Kunststoffstreifen herausragt. Dieser Ausführungsform kommt besondere Bedeutung zu. Es hat sich herausgestellt, dass mit einem derart eingerichteten Kunststoffstreifen eine besonders effektive Verbindung zwischen den Längskantenabschnitten hergestellt werden kann.

Nach einer besonders bevorzugten Ausführungsform, der im Rahmen der Erfindung besondere Bedeutung zukommt, wird der Kunststoffstreifen mit einer drahtförmigen bzw. bandförmigen Armierung wendelförmig zu dem Wickelschlauch kontinuierlich gewickelt. Bei der drahtförmigen bzw. bandförmigen Armierung handelt es sich vorzugsweise um einen Metalldraht und/oder um ein Kunststoffmonofilament.

Gemäß einer Ausführungsform der Erfindung wird mit einer von vornherein in den Kunststoff des Kunststoffstreifens eingekapselten drahtförmigen bzw. bandförmigen Armierung gearbeitet. Zweckmäßigerweise ist diese drahtförmige bzw. bandförmige Armierung im Bereich eines Längskantenabschnittes des Kunststoffstreifens bzw. im Bereich eines überlappenden Längskantenabschnittes eingekapselt.

Nach einer anderen Ausführungsform der Erfindung wird die drahtförmige bzw. bandförmige Armierung mittels des schmelzflüssigen Zusatzkunststoffes an dem Kunststoffstreifen fixiert. Eine bevorzugte Ausführungsform der Erfindung ist dadurch gekennzeichnet, dass die drahtförmige bzw. bandförmige Armierung zwischen den überlappenden Längskantenabschnitten eingeschweißt wird. Dabei wird die drahtförmige bzw. bandförmige Armierung zwischen den Längskantenabschnitten eingebracht und mittels des schmelzflüssigen Zusatzkunststoffes zwischen den überlappenden Längskantenabschnitten eingeschweißt. Nach einer anderen Ausführungsform wird eine Schicht des schmelzflüssigen Zusatzkunststoffes auf einem parallel zu den Längskantenabschnitten angeordneten Längsstreifen des Kunststoffstreifens aufgetragen und die drahtförmige bzw. bandförmige Armierung wird auf diese Schicht aufgebracht. Bei dieser Ausführungsform wird die drahtförmige bzw. bandförmige Armierung also außerhalb der überlappenden Längskantenabschnitte auf dem Kunststoffstreifen mit Hilfe des schmelzflüssigen Zusatzkunststoffes fixiert.

Es liegt im Rahmen der Erfindung, dass mit einem Zusatzkunststoff gearbeitet wird, der zumindest eine leitfähige und/oder antistatische Substanz enthält. Dabei wird zweckmäßigerweise dafür Sorge getragen, dass die aus dem Zusatzkunststoff (Schweißzusatzwerkstoff) entstehende Schweißnaht eine möglichst große Kontaktfläche zur Schlauchinnenseite aufweist. Mit Hilfe der vorgenannten Ausführungsform können elektrostatische Aufladungen der Schlauchwandung effektiv vermieden werden. Dadurch kann auch das resultierende Anhaften des durchströmenden Mediums an der Schlauchinnenwandung sowie die Zerstörung von Mess- und Regeleinrichtung vermieden werden und im Übrigen können durch elektrostatische Aufladungen zustande kommende Explosionen unterbunden werden. Zu diesem Zweck lehrt die Erfindung weiterhin, dass nach einer bevorzugten Ausführungsform der Kunststoffstreifen anstatt mit einer drahtförmigen oder bandförmigen Armierung oder zusätzlich zu einer drahtförmigen oder bandförmigen Armierung mit einem leitfähigen Strang wendelförmig zu dem Wickelschlauch kontinuierlich gewickelt wird. Leitfähiger Strang meint im Rahmen der Erfindung einen leitfähigen Draht, beispielsweise einen Kupferdraht oder eine Litze oder dergleichen. Der leitfähige Strang wird zu Erdung mit entsprechenden Kabeln bzw. metallischen Anschlusselementen verbunden. Durch die Einbettung des leitfähigen Stranges ergibt sich eine feste und verdrehsichere Verbindung, die hohen mechanischen Beanspruchungen standhält. Auf diese Weise kann eine funktionssichere Erdung verwirklicht werden.

Nachfolgend wird die Erfindung anhand einer lediglich ein Ausführungsbeispiel darstellenden Zeichnung näher erläutert. Es zeigen in schematischer Darstellung:
- Fig. 1a: eine Vorrichtung zur Durchführung des erfindungsgemäßen Verfahrens,
- Fig. 1b: einen Halbschnitt durch einen erfindungsgemäßen Wickelkern,
- Fig. 1c: einen Schnitt durch einen erfindungsgemäßen Wickelkern in einer anderen Ausführungsform,
- Fig. 2: eine erfindungsgemäße Schweißverbindung mit zwischen den überlappenden Längskantenabschnitten eingeschweißter drahtförmiger Armierung,
- Fig. 3: eine weitere Ausführungsform des Gegenstandes nach Fig. 2,
- Fig. 4: eine dritte Ausführungsform des Gegenstandes gemäß Fig. 2,
- Fig. 5: den Gegenstand nach Fig. 2 in einer vierten Ausführungsform,
- Fig. 6: eine weitere Ausführungsform des Gegenstandes gemäß Fig. 2,
- Fig. 7: eine sechste Ausführungsform des Gegenstandes nach Fig. 2,
- Fig. 8: eine weitere Ausführungsform des Gegenstandes nach Fig. 2,
- Fig. 9: den Gegenstand gemäß Fig. 2 in einer achten Ausführungsform,
- Fig. 10: eine neunte Ausführungsform des Gegenstandes gemäß Fig. 2,
- Fig. 11: den Gegenstand nach Fig. 2 in einer weiteren Ausführungsform,
- Fig. 12: eine elfte Ausführungsform des Gegenstandes gemäß Fig. 2,
- Fig. 13: den Gegenstand nach Fig. 2 in einer zwölften Ausführungsform,
- Fig. 14: eine weitere Ausführungsform des Gegenstandes gemäß Fig. 2,
- Fig. 15: den Gegenstand gemäß Fig. 2 in einer vierzehnten Ausführungsform,
- Fig. 16: eine weitere Ausführungsform des Gegenstandes nach Fig. 2,
- Fig. 17: eine zusätzliche Ausführungsform des Gegenstandes gemäß Fig. 2,
- Fig. 18: eine andere Ausführungsform des Gegenstandes nach Fig. 2,
- Fig. 19: eine weitere Ausführungsform des Gegenstandes gemäß Fig. 2,
- Fig. 20: den Gegenstand gemäß Fig. 2 in einer weiteren zusätzlichen Ausführungsform, und
- Fig. 21: eine andere Ausführungsform des Gegenstandes nach Fig. 2.

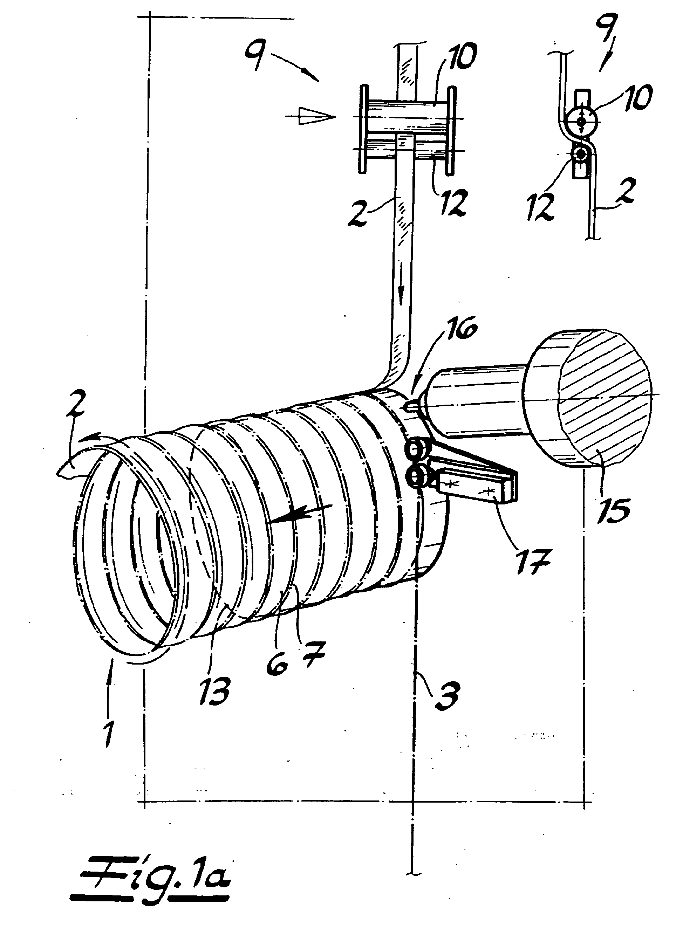

Die Fig. 1a zeigt eine Vorrichtung zur Herstellung eines Wickelschlauches 1 aus thermoplastischem Kunststoff. Im Ausführungsbeispiel nach Fig. 1a wird ein Kunststoffstreifen 2 mit einer in Längsrichtung des Kunststoffstreifens 2 verlaufenden drahtförmigen Armierung 3 kontinuierlich wendelförmig zu dem Wickelschlauch 1 gewickelt. Die Längskantenabschnitte 4, 5 benachbarter Wendelwicklungen 6, 7 des Kunststoffstreifens 2 werden erfindungsgemäß überlappend miteinander verbunden. Dabei werden die Längskantenabschnitte 4, 5 durch Einbringen eines schmelzflüssigen Zusatzkunststoffes 8 zwischen einander zugeordneten Längskantenabschnitten 4, 5 stoffschlüssig miteinander verschweißt. Der Zusatzkunststoff 8 kann eine andere Färbung als der thermoplastische Kunststoff des Kunststoffstreifens 2 aufweisen. Auf diese Weise kann nach sehr bevorzugter Ausführungsform des erfindungsgemäßen Herstellungsverfahrens gleichsam automatisch eine Farbkennung des Wickelschlauches 1 realisiert werden.

Vorzugsweise und im Ausführungsbeispiel nach Fig. 1a wird der Kunststoffstreifen 2 dem Wickelkern 13 über eine Bremseinrichtung 9 zugeführt. Dabei wird der Kunststoffstreifen 2 zwischen zwei Bremsrollen 10, 12 hindurch geführt. Auf diese Weise wird der Kunststoffstreifen 2 zwischen der Bremseinrichtung 9 und dem Wickelkern 13 gleichsam unter Zugspannung gesetzt und somit kann ein besonders effektives Anwickeln an den Wickelkern 13 erreicht werden.

In Fig. 1a ist erkennbar, dass der Kunststoffstreifen 2 auf einem zylinderförmigen Wickelkern 13 wendelförmig zu dem Wickelschlauch 1 kontinuierlich gewickelt wird. Während des Wickelvorganges wird der Wickelschlauch 1 gedreht und aufgrund des kontinuierlichen Wickelns bewegt sich der Wickelschlauch 1 in Richtung des ausgezogenen Pfeils in Fig. 1a. Mit dem Schweißextruder 15 wird der schmelzflüssige Zusatzkunststoff 8 erzeugt und mit einer Düse 16 zwischen den zugeordneten Längskantenabschnitten 4, 6 des Kunststoffstreifens 2 eingebracht. Gleichzeitig wird über eine zweite Zuführeinrichtung 17 eine im Ausführungsbeispiel nach Fig. 1a als Metalldraht ausgebildete Armierung 3 kontinuierlich zugeführt und zwischen den überlappenden Längskantenabschnitten 4, 5 des Kunststoffstreifens 2 eingeschweißt.

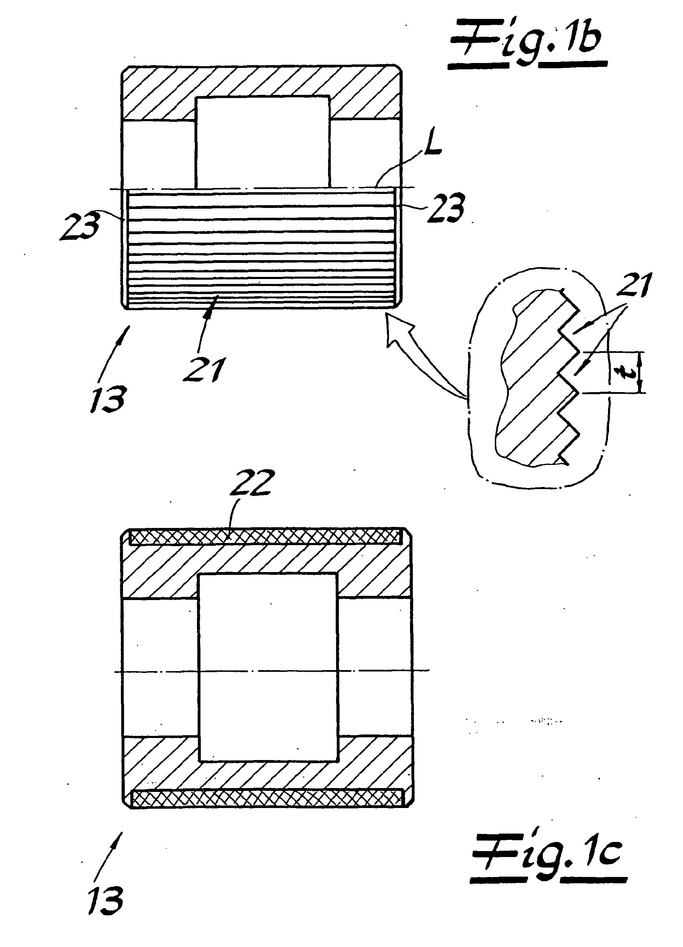

Erfindungsgemäß ist die Wickelkernoberfläche bzw. die Zylindermantelfläche des zylinderförmigen Wickelkerns 13 mit der Maßgabe eingerichtet, dass der den Wickelkern 13 umschlingende Kunststoffstreifen 2 in reibschlüssigen Kontakt mit der Wickelkernoberfläche kommt. Dazu wird nach sehr bevorzugter Ausführungsform der Erfindung mit einem Wickelkern 13 gearbeitet, dessen Wickelkernoberfläche eine Rändelung aufweist. Diese Ausführungsform ist in der Fig. 1b dargestellt. Hier weist die Wickelkernoberfläche eine Rändelung in Form von Riefen 21 auf, die im Ausführungsbeispiel parallel zur Wickelkernlängsachse L verlaufen. Die Teilung t der Rändelung, d.h. der Abstand von Rändelspitze zu Rändelspitze beträgt vorzugsweise 0,2 bis 1,5 mm. Nach einer anderen bevorzugten Ausführungsform der Erfindung wird mit einem Wickelkern 13 gearbeitet, dessen Wickelkernoberfläche eine Beschichtung 22 aus einem Elastomer aufweist (Fig. 1c). Bei dem Elastomer handelt es sich beispielsweise um ein Polyurethan oder um Gummi.

In der Fig. 1b ist im Übrigen erkennbar, dass zumindest 95 % der Wickelkernoberfläche bzw. der Zylindermantelfläche des zylinderförmigen Wickelkernes 13 mit der Rändelung versehen sind. Im Ausführungsbeispiel gemäß 1b ist lediglich an den Stirnseiten des Wickelkerns 13 eine umlaufende, die Rändelung begrenzende Phase 23 vorgesehen. - In der Fig. 1c ist erkennbar, dass auch die Beschichtung 22 sich über zumindest 95 % der Zylindermantelfläche des Wickelkernes 13 erstreckt.

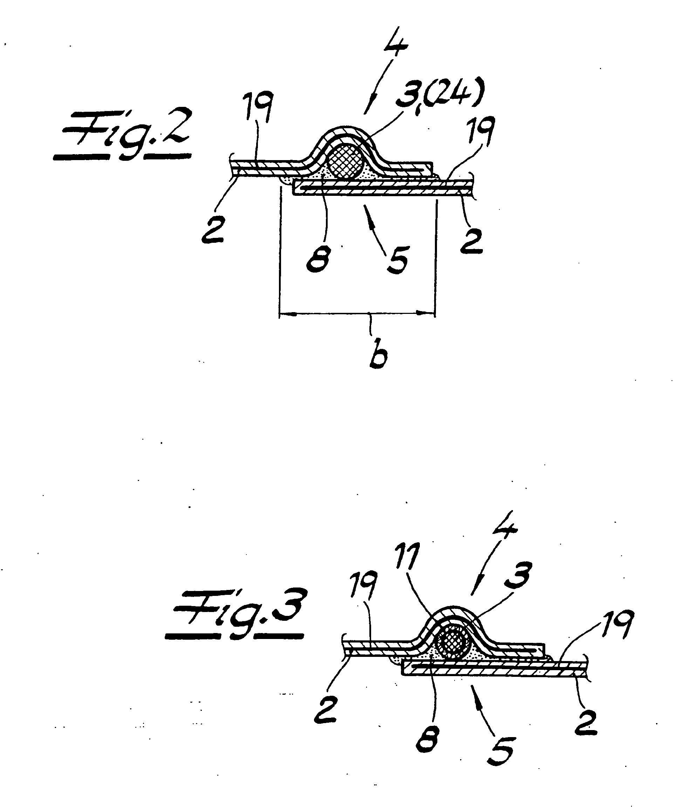

Nach einer Ausführungsform der Erfindung wird die drahtförmige Armierung 3 zwischen den Längskantenabschnitten 4, 5 eingebracht und zwischen den überlappenden Längskantenabschnitten 4, 5 eingeschweißt. Eine solche Schweißverbindung zeigen die Fig. 2 bis 5. Als Armierung 3 ist hier ein Metalldraht, beispielsweise ein Stahldraht, eingebracht worden. Im Ausführungsbeispiel nach den Fig. 2 bis 5 ist eine Schweißverbindung mit dem Zusatzkunststoff 8 hergestellt worden, um einerseits die Längskantenabschnitte 4, 5 und andererseits die Armierung 3 effektiv miteinander zu verbinden.

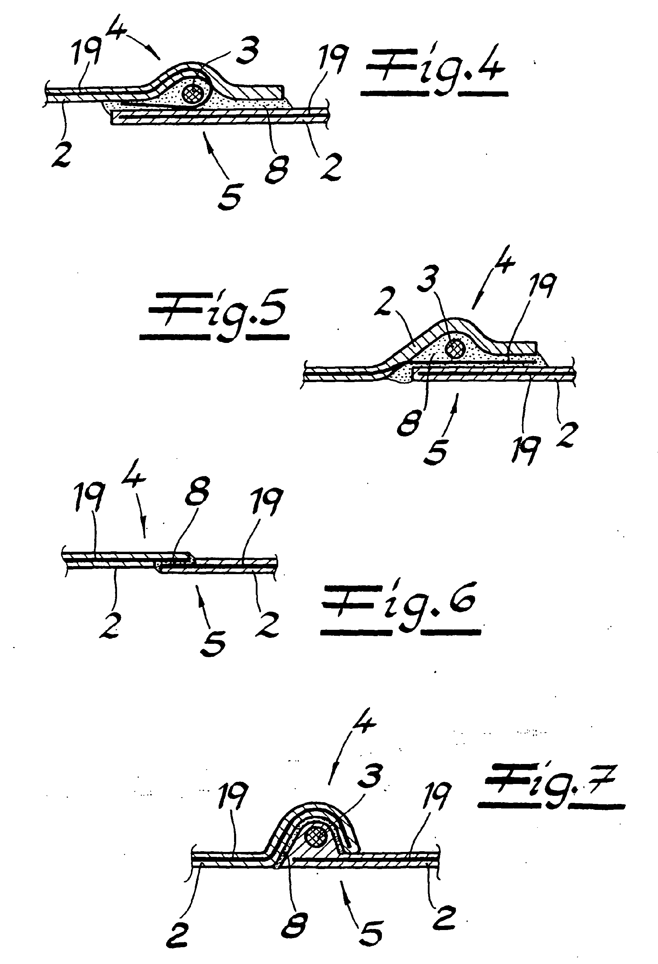

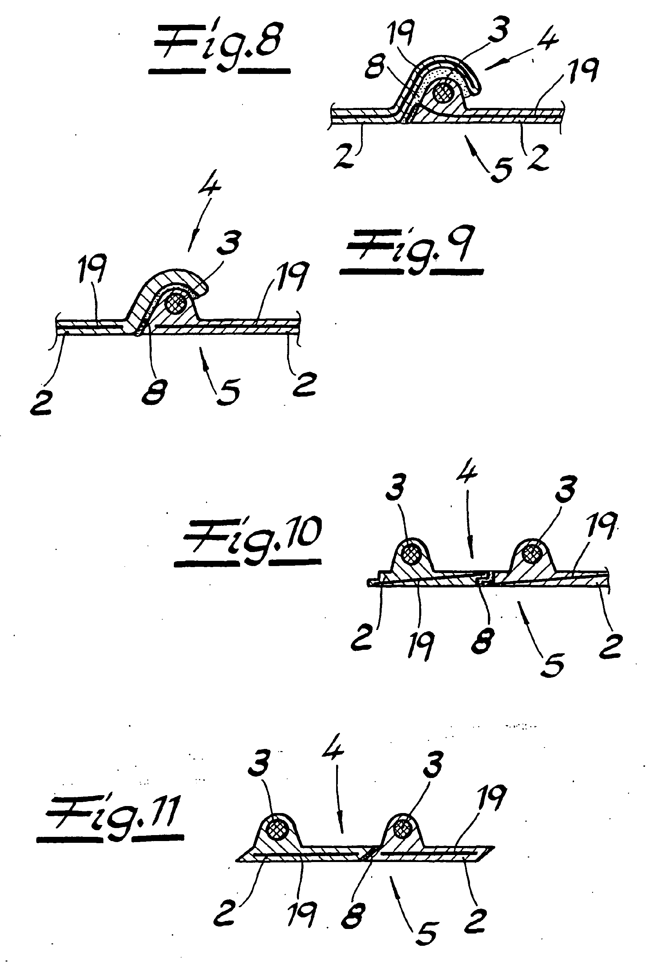

In allen Ausführungsbeispielen nach den Fig. 2 bis 19 und nach sehr bevorzugter Ausführungsform der Erfindung ist in den Kunststoffstreifen 2 eine flächige Armierung 19 eingebettet, die vorzugsweise und im Ausführungsbeispiel als Gewebe ausgebildet ist. Nach sehr bevorzugter Ausführungsform der Erfindung ist die flächige Armierung 19 an beiden Längskanten des Kunststoffstreifens 2 von dem Kunststoff des Kunststoffstreifens 2 eingekapselt. Diese letztgenannte bevorzugte Ausführungsform zeigen die Fig. 2, 3 sowie 7, 9 und 11 bis 17. Dagegen ist unter anderem im Ausführungsbeispiel nach den Fig. 4 und 5 die flächige Armierung 19 an einer Längskante bzw. an einem Längskantenabschnitt 4 freigelegt. Dieser freigelegte Teil der flächigen Armierung 19 umgreift im Ausführungsbeispiel nach Fig. 4 die drahtförmige Armierung 3. Im Ausführungsbeispiel nach Fig. 5 ist der freigelegte Teil der flächigen Armierung 19 unter der drahtförmigen Armierung 3 geführt. In beiden Fällen (Fig. 4 und 5) ist der freigelegte Teil der flächigen Armierung 19 aber vollständig von dem Zusatzkunststoff 8 der Schweißverbindung eingekapselt.

Im Ausführungsbeispiel nach Fig. 6 ist eine drahtförmige Armierung 3 nicht vorgesehen. Die flächige Armierung 19 ist hier an beiden Längskanten einseitig von dem Kunststoff des Kunststoffstreifens 2 befreit worden. Die freigelegten Teile der flächigen Armierung 19 werden bei dieser Ausführungsform unter Verwirklichung der überlappenden Längskantenabschnitte 4, 5 mit dem schmelzflüssigen Zusatzkunststoff 8 verbunden.

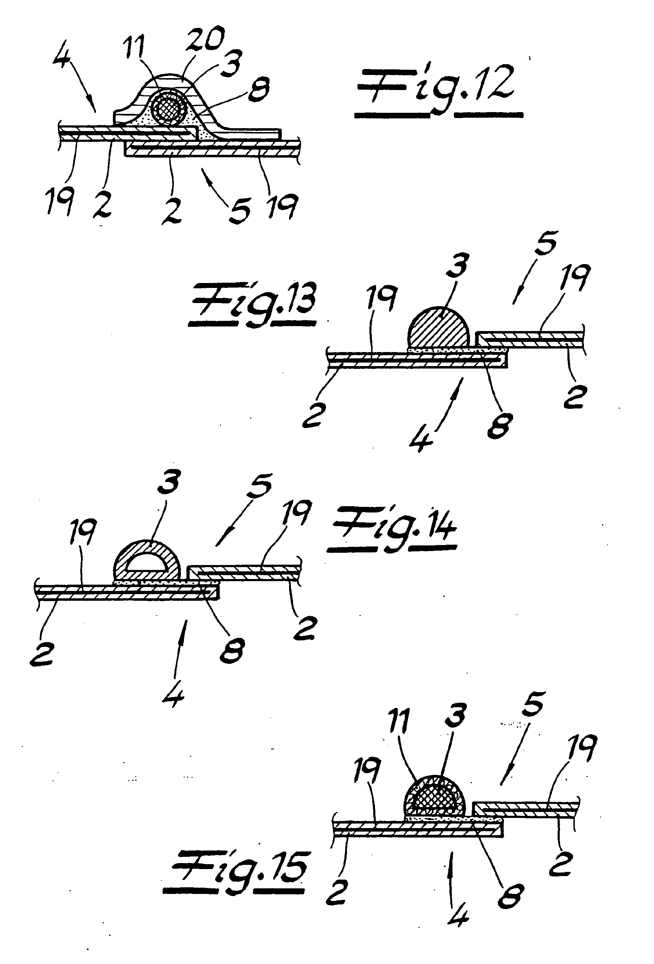

Im Ausführungsbeispiel nach den Fig. 7 bis 11 ist eine von vornherein in den Kunststoff des Kunststoffstreifens 2 eingekapselte drahtförmige Armierung 3, beispielsweise ein eingekapselter Stahldraht, vorgesehen. Bei der Schweißverbindung nach den Fig. 7, 8 und 9 ist die drahtförmige Armierung 3 in einem der überlappenden Längskantenabschnitte 4, 5 eingekapselt. Dagegen ist die drahtförmige Armierung 3 im Ausführungsbeispiel nach den Fig. 10 und 11 außerhalb der Schweißverbindung in den Kunststoff des Kunststoffstreifens 2 eingekapselt.

Die Fig. 12 zeigt eine besondere Ausführungsform einer erfindungsgemäßen Schweißverbindung. Hier wurde die drahtförmige Armierung 3 oberhalb der mittels des Zusatzkunststoffes 8 miteinander verbundenen Längskantenabschnitte 4, 5 aufgebracht und zwar ebenfalls mit Hilfe des Zusatzkunststoffes 8. Oberhalb des die drahtförmige Armierung 3 umgebenden Zusatzkunststoffes 8 ist hier noch ein spezieller Überdeckungsstreifen 20 vorgesehen. Im Ausführungsbeispiel nach Fig. 12 ist die drahtförmige Armierung 3 ebenso wie im Ausführungsbeispiel nach Fig. 3 mit einem Haftvermittler 11 ummantelt. Bei dem Haftvermittler 11 mag es sich im Ausführungsbeispiel um einen thermoplastischen Kunststoff handeln, der die drahtförmige Armierung 3 umgibt.

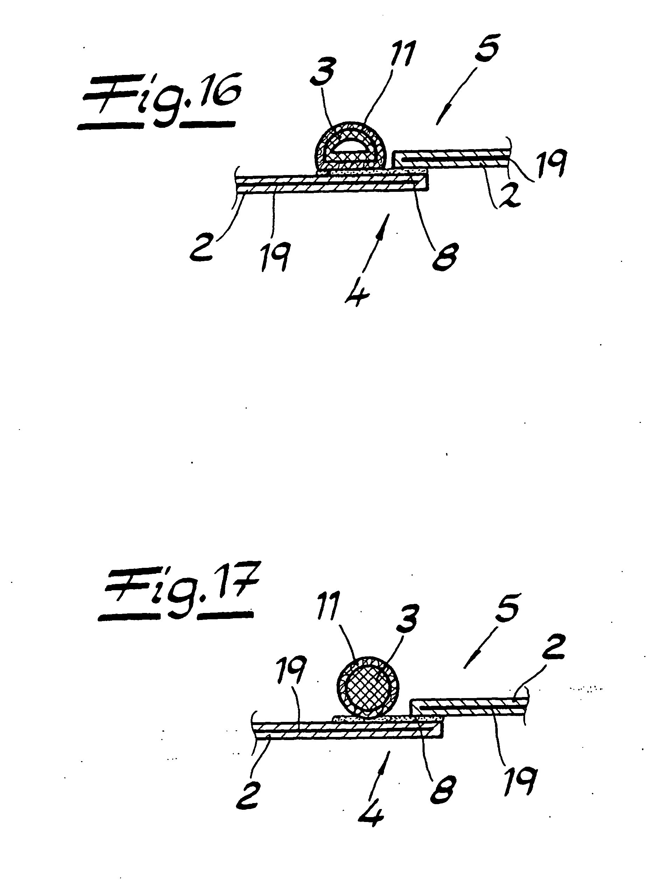

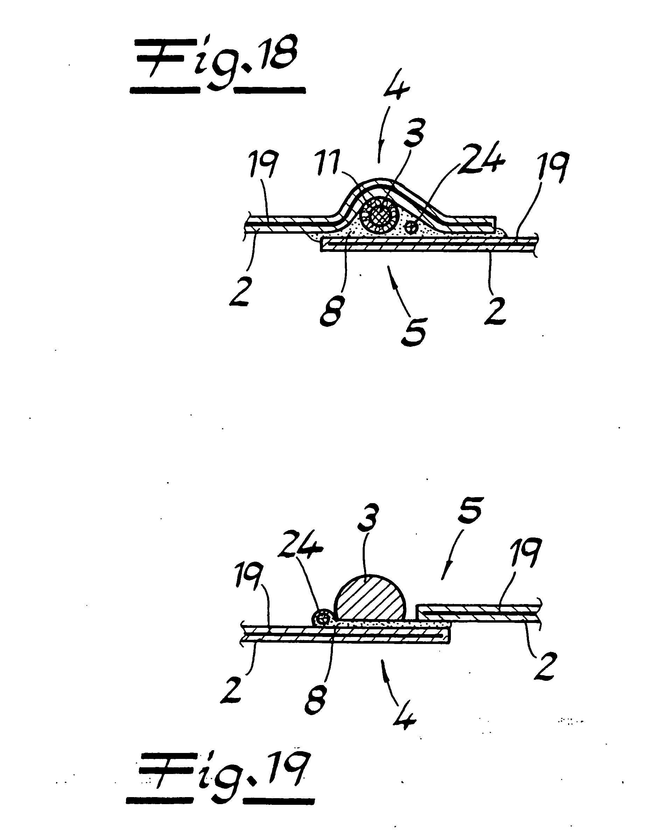

In den Fig. 13 bis 17 und 19 ist eine Schweißverbindung gezeigt, die nach einer Ausführungsform des erfindungsgemäßen Verfahrens hergestellt wurde, bei der der schmelzflüssige Zusatzkunststoff 8 so aufgespritzt wird, dass die Überlappungen der Längskantenabschnitte 4, 5 und die drahtförmige Armierung 3 in einem Schritt verschweißt werden können. Der schmelzförmige Zusatzkunststoff 8 wird auf den Längskantenabschnitten 4, 5 des Kunststoffstreifens 2 aufgetragen bzw. zusätzlich noch parallel zu den Längskantenabschnitten 4, 5 aufgetragen und die drahtförmige Armierung 3 kann dann auf diese letztgenannte schmelzflüssige Schicht aufgebracht werden. Im Ausführungsbeispiel nach den Fig. 13 und 19 besteht die drahtförmige Armierung 3 aus thermoplastischem Kunststoff und ist massiv ausgeführt. Bei dieser drahtförmigen Armierung 3 handelt es sich vorzugsweise um ein thermoplastisches Kunststoffmonofilament. Im Ausführungsbeispiel nach Fig. 14 ist die drahtförmige Armierung 3 aus thermoplastischem Kunststoff innen hohl ausgeführt. Das hat den Vorteil, dass bei einer Verformung des Wickelschlauches 1 in radialer Richtung aufgrund elastischer Rückstellkräfte eine reversible Verformung in den Ausgangszustand erfolgen kann.

Im Ausführungsbeispiel nach Fig. 15 ist die drahtförmige Armierung 3 aus einem anderen Material ausgeführt als die als Haftvermittler 11 fungierende Ummantelung, die im Ausführungsbeispiel aus einem thermoplastischem Kunststoff besteht. Im Ausführungsbeispiel nach Fig. 16 ist die als Kunststoffprofil ausgebildete und vorzugsweise aus einem thermoplastischen Kunststoff bestehende drahtförmige Armierung 3 innen hohl ausgeführt und diese Armierung 3 ist zusätzlich mit einem Haftvermittler 11 ummantelt. Fig. 17 zeigt eine ähnliche drahtförmige Armierung 3 wie die Fig. 15. Hier ist die drahtförmige Armierung 3, mit kreisrundem Querschnitt ausgebildet.

Nach einer Ausführungsform der Erfindung kann der Kunststoffstreifen 2 anstatt mit einer drahtförmigen/bandförmigen Armierung 3 mit einem leitfähigen Strang 24 wendelförmig zu dem Wickelschlauch 1 kontinuierlich gewickelt werden. Der leitfähige Strang 24 kann dann gleichsam auch als Armierung 3 funktionieren. So kann es sich bei der Armierung 3 in der Fig. 2 um einen leitfähigen Strang 24 handeln, der beispielsweise als Litze ausgebildet ist.

Fig. 18 zeigt eine ähnliche Ausführungsform wie die Fig. 3. Hier ist neben der mit dem Haftvermittler 11 ummantelten Armierung 3 zusätzlich noch ein leitfähiger Strang 24 in den Zusatzkunststoff 8 eingekapselt.

In Fig. 19 ist eine Ausführungsform dargestellt, die der Ausführungsform gemäß Fig. 13 ähnelt. Hier ist der leitfähige Strang 24 in den parallel zu den Längskantenabschnitten 4, 5 aufgetragenen Zusatzkunststoff 8 eingekapselt.

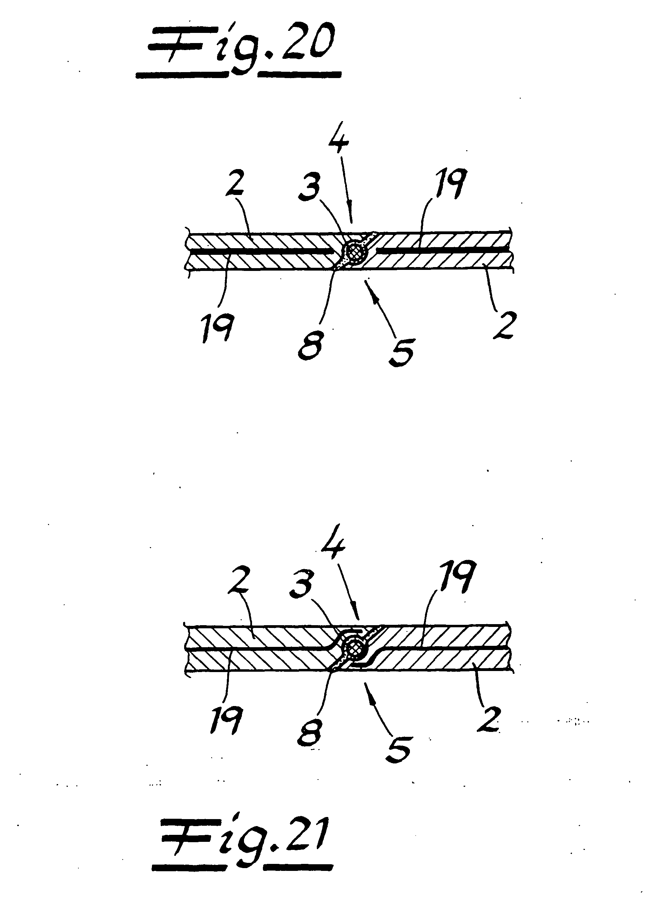

Die Fig. 20 und 21 zeigen eine weitere Ausführungsform, bei der der Kunststoffstreifen 2 mit der drahtförmigen oder bandförmigen Armierung 3 wendelförmig zu dem Wickelschlauch 1 kontinuierlich gewickelt wurde. Die drahtförmige oder bandförmige Armierung 3 wird hier mittels des schmelzflüssigen Zusatzkunststoffes fixiert und zwischen den überlappenden Längskantenabschnitten 4, 5 eingeschweißt. Bei diesen Ausführungsformen sind die Längskantenabschnitte 4, 5 an ihren Längskanten abgeschrägt ausgebildet. In den Fig. 20 und 21 ist erkennbar, dass zwei einander zugeordnete Längskantenabschnitte 4, 5 komplementäre Schrägen an den Längskanten aufweisen. Zwischen diesen Schrägen wird der schmelzflüssige Zusatzkunststoff eingebracht und die Armierung 3 wird zwischen den Schrägen bzw. zwischen dem schmelzflüssigen Zusatzkunststoff eingekapselt bzw. eingeschweißt. Die Fig. 20 und 21 zeigen weiterhin, dass bei dieser Ausführungsform die Oberflächen der Längskantenabschnitte 4, 5 vorzugsweise miteinander fluchten.

## Patentansprüche

1. Verfahren zur Herstellung eines Wickelschlauches (1) aus thermoplastischem Kunststoff, wobei zumindest ein Kunststoffstreifen (2) auf einem zylinderförmigen Wickelkern (13) wendelförmig zu dem Wickelschlauch (1) kontinuierlich gewickelt wird, wobei Längskantenabschnitte (4, 5) benachbarter Wendelwicklungen (6, 7) des Kunststoffstreifens (2) überlappend miteinander verbunden werden, wobei die Längskantenabschnitte (4, 5) durch Einbringen eines schmelzflüssigen Zusatzkunststoffes (8) zwischen einander zugeordneten Längskantenabschnitten (4, 5) stoffschlüssig miteinander verschweißt werden, und wobei mit einem Wickelkern (13) gearbeitet wird, dessen Wickelkernoberfläche eine Rändelung aufweist, so dass der den Wickelkern (13) umschlingende Kunststoffstreifen (2) in reibschlüssigen Kontakt mit der Wickelkernoberfläche kommt.

2. Verfahren nach Anspruch 1, wobei mit einem Wickelkern (13) gearbeitet wird, dessen Wickelkernoberfläche eine Rändelung in Form von Riefen (21) aufweist, welche Riefen (21) vorzugsweise in Richtung der Wickelkernlängsachse (L) verlaufen.

3. Verfahren zur Herstellung eines Wickelschlauches (1) aus thermoplastischem Kunststoff, wobei zumindest ein Kunststoffstreifen (2) auf einen zylinderförmigen Wickelkern (13) wendelförmig zu dem Wickelschlauch (1) kontinuierlich gewickelt wird, wobei Längskantenabschnitte (4, 5) benachbarter Wendelwicklungen (6, 7) des Kunststoffstreifens (2) überlappend miteinander verbunden werden, wobei die Längskantenabschnitte (4, 5) durch Einbringen eines schmelzflüssigen Zusatzkunststoffes (8) zwischeneinander zugeordneten Längskantenabschnitten (4, 5) stoffschlüssig miteinander verschweißt werden und wobei mit einem Wickelkern (13) gearbeitet wird, dessen Wickelkernoberfläche eine aus zumindest einem Elastomer bestehende Beschichtung (22) aufweist, so dass der den Wickelkern (13) umschlingende Kunststoffstreifen (2) in reibschlüssigen Kontakt mit der Wickelkernoberfläche kommt.

4. Verfahren nach einem der Ansprüche 1 bis 3, wobei eine flächige Armierung (19) in den Kunststoffstreifen (2) eingebettet ist.

5. Verfahren nach Anspruch 4, wobei die flächige Armierung (19) aus einem Gewebe und/oder einem Gewirk und/oder einem Geflecht und/oder aus einer Folie besteht.

6. Verfahren nach einem der Ansprüche 4 oder 5, wobei die flächige Armierung (19) an zumindest einer Längskante, vorzugsweise an beiden Längskanten des Kunststoffstreifens (2) vom Kunststoff eingekapselt ist.

7. Verfahren nach einem der Ansprüche 1 bis 6, wobei der Kunststoffstreifen (2) mit einer drahtförmigen oder bandförmigen Armierung (3) wendelförmig zu dem Wickelschlauch (1) kontinuierlich gewickelt wird.

8. Verfahren nach Anspruch 7, wobei mit einer vornherein in den Kunststoff des Kunststoffstreifens eingekapselten drahtförmigen bzw. bandförmigen Armierung (3) gearbeitet wird.

9. Verfahren nach Anspruch 7 oder 8, wobei die drahtförmige oder bandförmige Armierung (3) mittels des schmelzflüssigen Zusatzkunststoffes (8) an dem Kunststoffstreifen (2) fixiert wird.

10. Verfahren nach einem der Ansprüche 7 bis 9, wobei die drahtförmige oder bandförmige Armierung (3) zwischen den überlappenden Längskantenabschnitten (4, 5) eingeschweißt wird.

11. Verfahren nach einem der Ansprüche 7 bis 10, wobei eine Schicht des schmelzflüssigen Zusatzkunststoffes (8) auf einem parallel zu den Längskantenabschnitten (4, 5) angeordneten Längsstreifen des Kunststoffstreifens (2) aufgetragen wird und die drahtförmige oder bandförmige Armierung (3) auf diese Schicht aufgebracht wird.

12. Verfahren nach einem der Ansprüche 1 bis 11, wobei mit einem Zusatzkunststoff (8) gearbeitet wird, der zumindest eine leitfähige und/oder antistatische Substanz enthält.

13. Verfahren nach einem Ansprüche 7 bis 12, wobei der Kunststoffstreifen (2) anstatt mit einer drahtförmigen oder bandförmigen Armierung (3) oder zusätzlich zu einer drahtförmigen oder bandförmigen Armierung (3) mit einem leitfähigen Strang (24) wendelförmig zu dem Wickelschlauch (1) kontinuierlich gewickelt wird.

## Claims

1. A method for producing a coiled tube (1) made of a thermoplastic material, whereby at least one strip of plastic (2) is coiled continuously in a helical pattern onto a cylindrical coil core (13) to form the coiled tube (1), whereby the longitudinal edge sections (4, 5) of adjacent helical windings (6, 7) of the plastic strip (2) are joined together so they overlap, with the longitudinal edge sections (4, 5) being welded together so they are physically bonded by introducing a molten additional plastic (8) between the respective paired longitudinal edge sections (4, 5) and whereby a coil core (13) is used, its coil core surface having knurling, so that the plastic strip (2) wrapped around the coil core (13) is in friction-locking contact with the coil core surface.

2. The method according to Claim 1, whereby this method is carried out using a coil core (13) having a coil core surface with knurling in the form of grooves (21), said grooves (21) preferably running in the direction of the longitudinal axis (L) of the coil core.

3. The method for manufacturing a coiled tube (1) made of a thermoplastic material, whereby at least one plastic strip (2) is coiled continuously in a helical pattern onto a cylindrical coil core (13) to form the coiled tube (1), whereby the longitudinal edge sections (4, 5) of neighboring coil windings (6, 7) of the plastic strip are joined together so they overlap, the longitudinal edge sections (4, 5) being integrally welded together by introducing a molten additional plastic (8) between the respective paired longitudinal edge sections (4, 5), this method being performed using a coil core (13) whose coil core surface has a coating (22) consisting of at least one elastomer, so that the plastic strip (2) wrapped around the coil core (13) comes into friction-locked contact with the coil core surface.

4. The method according to any one of Claims 1 through 3, whereby a surface reinforcement (19) is embedded in the plastic strips (2).

5. The method according to Claim 4, whereby the surface reinforcement (19) consists of a woven fabric and/or a knit fabric and/or a mesh fabric and/or a film.

6. The method according to any one of Claims 4 or 5, whereby the surface reinforcement (19) is encapsulated by plastic on at least one longitudinal edge of the plastic strip (2), preferably on both longitudinal edges.

7. The method according to any one of Claims 1 through 6, whereby the plastic strip (2) with a wire-shaped or strip-shaped reinforcement (3) is coiled continuously in a helical pattern to form the coiled tube (1).

8. The method according to Claim 7, whereby the process is carried out with a wire-shaped and/or strip-shaped reinforcement (3) encapsulated from the beginning in the plastic of the plastic strip.

9. The method according to Claim 7 or 8, whereby the wire-shaped or strip-shaped reinforcement (3) is secured on the plastic strip (2) by means of the additional molten plastic (8).

10. The method according to any one of Claims 7 through 9, whereby the wire-shaped or strip-shaped reinforcement (3) is welded between the overlapping longitudinal edge sections (4, 5).

11. The method according to any one of Claims 7 through 10, whereby a layer of the additional molten plastic (8) is applied to a longitudinal strip of the plastic strip (2) arranged parallel to the longitudinal edge sections (4, 5) and the wire-shaped or strip-shaped reinforcement (3) is applied to this layer.

12. The method according to any one of Claims 1 through 11, whereby the method is carried out with an additional plastic (8) which contains at least one conductive and/or antistatic substance.

13. The method according to any one of Claims 7 through 12, whereby the plastic strip (2) is coiled continuously with a conductive strand (24) in the form of a helix to form the coiled tube (1) instead of being formed with a wire-shaped or strip-shaped reinforcement (3) or in addition to a wire-shaped or strip-shaped reinforcement (3).

## Revendications

1. Procédé de fabrication d'un flexible à enrouler (1) en matière thermoplastique, dans lequel on enroule en continu au moins une bande de matière plastique (2) sous forme hélicoïdale sur un noyau d'enroulement cylindrique (13) pour obtenir le flexible à enrouler (1), on relie entre elles des sections de bord longitudinal (4, 5) d'enroulement hélicoïdaux voisins (6, 7) de la bande de matière plastique (2) de façon à ce qu'elles se chevauchent, on soude entre elles par complémentarité de matière les sections de bords longitudinaux (4, 5) par introduction d'une matière plastique additionnelle (8) entre des sections de bord longitudinal (4, 5) mutuellement associées, et on travaille avec un noyau d'enroulement (13) dont la surface supérieure de noyau d'enroulement comporte un moletage, pour que la bande de matière plastique (2) entortillée autour du noyau d'enroulement (13) se mette en contact par friction avec la surface du noyau d'enroulement.

2. Procédé selon la revendication 1, dans lequel on travaille avec un noyau d'enroulement (13) dont la surface du noyau d'enroulement comporte un moletage sous forme de cannelures (21), lesquelles cannelures (21) s'étendant de préférence en direction de l'axe longitudinal du noyau d'enroulement (L).

3. Procédé de fabrication d'un flexible à enrouler (1) en matière thermoplastique, dans lequel on enroule en continu au moins une bande de matière plastique (2) sous forme hélicoïdale sur un noyau d'enroulement cylindrique (13) pour obtenir le flexible à enrouler (1), on relie entre elles des sections de bord longitudinal (4, 5) d'enroulement hélicoïdaux voisins (6, 7) de la bande de matière plastique (2) de façon à ce qu'elles se chevauchent, on soude entre elles par complémentarité de matière les sections de bords longitudinaux (4, 5) par introduction d'une matière plastique additionnelle (8) entre des sections de bord longitudinal (4, 5) mutuellement associées, et on travaille avec un noyau d'enroulement (13) dont la surface supérieure de noyau d'enroulement comporte un revêtement (22) en au moins un élastomère, pour que la bande de matière plastique (2) entortillée autour du noyau d'enroulement (13) vienne se mettre en contact par friction avec la surface du noyau d'enroulement.

4. Procédé selon l'une quelconque des revendications 1 à 3, une armature en nappe (19) étant incorporée dans la bande de matière plastique.

5. Procédé selon la revendication 4, l'armature en nappe (19) étant en un tissu et/ou en une structure et/ou en un film.

6. Procédé selon l'une quelconque des revendications 4 ou 5, l'armature en nappe (19) étant encapsulée par la matière plastique sur au moins un bord longitudinal, de préférence sur les deux bords longitudinaux de la bande en matière plastique.

7. Procédé selon l'une quelconque des revendications 1 à 6, dans lequel on enroule en continu la bande en matière plastique (2) sous forme hélicoïdale avec une armature (3) en forme de fil métallique ou en forme de bande pour obtenir le flexible à enrouler (1).

8. Procédé selon la revendication 7, dans lequel on travaille avec une armature (3) en forme de fil de fer ou de bande encapsulée d'emblée dans la matière plastique de la bande en matière plastique.

9. Procédé selon la revendication 7 ou 8, dans lequel on fixe l'armature (3) en forme fil de fer ou de bande sur la bande de matière plastique (2) au moyen de la matière plastique additionnelle en fusion (8).

10. Procédé selon l'une quelconque des revendications 7 à 9, dans lequel on soude l'armature (3) en forme de fil de fer ou de bande entre les sections de bord longitudinal (4, 5) qui se chevauchent.

11. Procédé selon l'une quelconque des revendications 7 à 10, dans lequel on applique une couche de la matière plastique additionnelle en fusion (8) sur une bande longitudinale de la bande de matière plastique (2) disposée à la parallèle des sections de bord longitudinal (4, 5) et on monte l'armature (3) en forme de fil métallique ou de bande sur cette couche.

12. Procédé selon l'une quelconque des revendications 1 à 11, dans lequel on travaille avec une matière plastique additionnelle (8) qui contient au moins une substance conductrice et/ou antistatique.

13. Procédé selon l'une quelconque des revendications 7 à 12, dans lequel pour obtenir le flexible à enrouler (1), on enroule en continu la bande de matière plastique (2) sous forme hélicoïdale avec un écheveau conducteur (24), en remplacement de l'armature (3) en forme de fil de fer ou de bande ou en supplément de l'armature (3) en forme de fil de fer ou de bande.
